# DEMANDE DE BREVET EUROPEEN

(11) **EP 1 950 877 A1**
(43) Date de publication de la demande: **30.07.2008**
(21) Numéro de dépôt: 08150508.3
(22) Date de dépôt: 22.01.2008
(51) Int. Cl.: H02P 1/42, H02P 25/04

(54) **Procédé d'alimentation d'un moteur électrique monophasé et système d'alimentation pour la mise en oeuvre d'un tel procédé**

(30) Priorité: 23.01.2007 FR 0752828
(71) Demandeur: Moteurs Leroy Somer, 16000 Angouleme (FR)
(72) Inventeur: Makki, Ali, 69006, LYON (FR)
(74) Mandataire: Tanty, François

(57) **Abrégé**

La présente invention concerne un procédé d'alimentation d'un moteur électrique asynchrone monophasé (M), comportant un premier (5) et un deuxième (6) enroulement, dans lequel l'un (5) des enroulements est alimenté par le réseau alternatif et l'autre enroulement (6) est alimenté par un onduleur (8) qui reçoit une tension redressée du réseau et qui est contrôlé de manière à ce que ce deuxième enroulement (6) soit alimenté avec une onde de tension déphasée par rapport à celle du réseau.

## Description

La présente invention concerne l'alimentation des moteurs électriques asynchrones monophasés.

Les moteurs asynchrones monophasés présentent la particularité de ne pas démarrer spontanément.

Il est ainsi connu de réaliser les moteurs asynchrones monophasés avec deux enroulements et d'utiliser un élément de démarrage pour créer un déphasage électrique du courant dans l'un des enroulements par rapport à l'autre afin d'obtenir un couple de démarrage.

Le meilleur couple de démarrage est obtenu quand les deux champs magnétiques respectivement associés aux enroulements du moteur sont déphasés de 90° électriques.

L'élément de démarrage le plus répandu est le condensateur.

Le déphasage idéal de 90° électrique n'est jamais atteint dans le cas de l'utilisation d'un tel élément de démarrage, vu l'existence d'une inductance et de la résistance de la phase en série avec le condensateur, ce qui baisse le couple de démarrage, lequel peut ne pas atteindre le couple nominal du moteur.

Quand le couple de démarrage exigé dépasse le couple nominal du moteur, il est connu de rajouter un condensateur supplémentaire avec un organe de commutation tel qu'un relais pour mettre hors circuit le condensateur supplémentaire après que le moteur a atteint son couple maximal.

Il n'est toutefois pas souhaitable d'utiliser un condensateur à forte valeur capacitive, car cela peut engendrer une augmentation importante du courant et des échauffements excessifs ainsi qu'une augmentation des pertes.

La demande internationale WO 2005/057773 divulgue un système de démarrage d'un moteur monophasé à induction dans lequel les deux enroulements du moteur sont reliés respectivement en série avec deux interrupteurs électroniques qui sont commandés avec un déphasage entre eux pendant le démarrage du moteur. L'enroulement de démarrage cesse d'être alimenté après le démarrage du moteur. Un tel système est relativement complexe et de plus nécessite un contrôle précis de l'instant de commutation de chaque interrupteur électronique.

On connaît par la demande EP 0 921 631 un procédé de commande de la vitesse d'un moteur asynchrone à induction monophasée dont le stator comporte un enroulement principal et un enroulement auxiliaire constitué de deux demi enroulements.

On connaît par la demande DE 42 15 551 un alternateur comportant un premier enroulement alimenté par le réseau par l'intermédiaire d'un interrupteur et un deuxième et un troisième enroulement alimentés par un circuit de commutation, le deuxième et le troisième enroulement étant constitués chacun de deux demi- enroulements.

On connaît par le brevet US 6 051 952, un dispositif d'alimentation d'un moteur synchrone monophasé comportant un premier enroulement alimenté par le réseau par l'intermédiaire d'un interrupteur et un deuxième enroulement constitué de deux demi enroulements alimentés par un système de commutation.

L'invention vise à perfectionner encore les procédés et systèmes pour l'alimentation électrique des moteurs asynchrones monophasés.

L'invention y parvient grâce à un procédé d'alimentation d'un moteur électrique asynchrone monophasé, comportant un premier et un deuxième enroulements, dans lequel l'un des enroulements est alimenté par le réseau alternatif et l'autre enroulement est alimenté par un onduleur qui reçoit une tension redressée du réseau et qui est contrôlé de manière à ce que le deuxième enroulement soit alimenté avec une onde de tension déphasée par rapport à celle du réseau, de préférence déphasée de 90° électrique au moins lors du démarrage.

L'invention peut permettre d'obtenir un couple de démarrage élevé sans utiliser de condensateur de démarrage de forte capacité ni d'organe de commutation associé.

L'invention peut permettre une vitesse de démarrage plus élevée, donc de réduire le temps de démarrage, ainsi qu'une baisse du courant en régime nominal, ce qui permet d'augmenter la puissance du moteur ou de réduire sa taille à puissance identique.

La consommation d'énergie au démarrage peut être réduite.

Tout danger lié à l'utilisation d'un élément de démarrage constitué par un condensateur peut également être éliminé.

L'invention peut aussi permettre, le cas échéant, d'éliminer le condensateur permanent généralement rencontré sur les moteurs asynchrones monophasés.

L'invention peut permettre d'alimenter de façon continuelle les deux phases du moteur. Cela permet d'exploiter au mieux les performances du moteur, le circuit magnétique et le circuit électrique étant utilisés au mieux.

Le cas échéant, la phase alimentée par l'onduleur peut être coupée après le démarrage, au détriment de la puissance utile du moteur.

Le premier enroulement peut être directement alimenté par le réseau alternatif, sans l'intermédiaire d'un interrupteur électronique, par exemple à semi-conducteur.

Les enroulements du moteur peuvent n'être constitués que par le premier et le deuxième enroulement.

Le deuxième enroulement peut ne comporter que deux bornes, chacune étant reliée à une sortie de l'onduleur.

Le deuxième enroulement est par exemple différent d'un enroulement constitué de deux demi enroulements ayant chacun une première borne reliée à un interrupteur et une deuxième borne connectée par un point médian à la deuxième borne de l'autre demi enroulement, le point médian étant connecté à la sortie d'un redresseur.

Selon un aspect de l'invention, le déphasage est constant, sensiblement égal à 90° électrique, par exemple à une tolérance de ± 5 %. En variante, le déphasage peut être modifié après le démarrage de façon à agir sur la vitesse du moteur en régime nominal.

L'amplitude de la tension délivrée par l'onduleur peut être constante. En variante, l'amplitude est modifiée de façon à agir sur la vitesse du moteur.

Le système d'alimentation permet d'avoir si on le souhaite trois modes de contrôle de la vitesse du moteur. Le premier par variation du déphasage, le deuxième par variation de l'amplitude de la tension et le troisième par la variation de l'amplitude et du déphasage.

L'amplitude et/ou le déphasage peuvent être modifiés, par exemple, en fonction d'une vitesse de consigne et de la vitesse mesurée du moteur, par exemple par un capteur de vitesse, afin de tendre à maintenir cette dernière égale à la valeur de consigne.

Le contrôle de l'onduleur peut s'effectuer, dans un exemple de mise en oeuvre de l'invention, en fonction de la détection d'un extremum de l'onde de tension du réseau, par exemple un maximum.

Le contrôle de l'onduleur peut s'effectuer, dans une variante de mise en oeuvre de l'invention, en fonction de la détection d'un passage par zéro de l'onde de tension du réseau.

L'onduleur, notamment lorsqu'il n'est pas programmable et génère une onde de tension de valeur nulle à partir de l'instant où son fonctionnement est déclenché, peut être contrôlé par un signal retardé de 1/(4*f), où f est la fréquence de la tension du réseau, le retard étant compté à partir du passage par zéro de l'onde de tension du réseau.

Les premier et deuxième enroulements peuvent être identiques ou différents.

L'utilisation d'un moteur présentant des enroulements identiques peut s'avérer avantageuse en termes de contrôle et de production, car pour le contrôle il n'est pas nécessaire de connaître précisément les paramètres électriques des enroulements, tels que les résistances et les inductances, pour créer un déphasage précis. Si les enroulements sont différents, le déphasage peut être calculé en fonction de la différence des paramètres électriques. Au démarrage, la loi d'Ohm s'applique et l'on peut considérer que U=Z*I, où Z est l'impédance totale qui contient l'inductance et la résistance d'une phase. Le déphasage du courant par rapport à la tension est fonction de l'inductance et de la résistance. Le rapport L1/R1 de la première phase définit le retard (déphasage α1) du courant I1 par rapport à la tension U1. Le rapport L2/R2 de la deuxième phase définit le retard (déphasage α2) du courant I2 par rapport à la tension U2. Si α1 différent de α2, il peut être souhaitable d'avancer ou de retarder l'instant d'alimentation de la deuxième phase. Si α2-α1 inférieur à zéro, on peut retarder l'alimentation de la deuxième phase et si α2-α1 plus grand que zéro on peut avancer l'alimentation. Le temps d'avance ou retard peut être proportionnel à α2-α1. Si les phases sont identiques, α2-α1 = 0.

L'invention a encore pour objet, selon un autre de ses aspects, un système d'alimentation d'un moteur électrique asynchrone monophasé, comportant un premier et un deuxième enroulement, ce système comportant :
- une entrée à relier à un réseau alternatif monophasé,
- une première sortie reliée à l'entrée du système et à relier au premier enroulement du moteur,
- une deuxième sortie à relier au deuxième enroulement du moteur,
- un onduleur relié à l'entrée du système par l'intermédiaire d'un redresseur et relié à la deuxième sortie,
- une unité de contrôle de l'onduleur, configurée pour agir sur le fonctionnement de celui-ci de telle sorte que l'onde de tension fournie par l'onduleur à la deuxième sortie soit déphasée d'une grandeur prédéfinie par rapport à l'onde de tension du réseau, le déphasage étant de préférence sensiblement égal à 90° électrique, au moins lors du démarrage du moteur.

L'unité de contrôle peut être agencée pour détecter un extremum de l'onde de tension du réseau et commander l'onduleur en fonction de la détection de cet extremum.

L'unité de contrôle peut, en variante, être agencée pour détecter un passage par zéro de l'onde de tension du réseau et commander l'onduleur en fonction de cette détection.

L'unité de contrôle peut comporter une temporisation pour retarder un signal de commande émis au passage par zéro de l'onde de tension et commander en fonction de ce signal retardé l'onduleur.

L'onduleur peut être de type PWM, par exemple. Un tel onduleur peut permettre d'obtenir une forme d'onde très proche d'une sinusoïde. Le rapport cyclique peut être constant ou variable si l'on souhaite par exemple faire varier la vitesse du moteur. D'autres modes de commutation que PWM peuvent être utilisés, le cas échéant.

L'unité de contrôle peut être agencée, le cas échéant, pour agir sur l'amplitude et/ou le déphasage de la tension délivrée par l'onduleur en fonction d'une vitesse de consigne et d'un signal représentatif de la vitesse du moteur.

L'invention a encore pour objet, selon un autre de ses aspects, un ensemble comportant un système d'alimentation tel que défini ci-dessus et un moteur électrique monophasé asynchrone dont les premier et deuxième enroulements sont respectivement reliés aux première et deuxième sorties du système de contrôle.

L'invention pourra être mieux comprise à la lecture de la description détaillée qui va suivre, d'exemples de mise en oeuvre non limitatifs de celle-ci, et l'examen du dessin annexé, sur lequel :
- la figure 1 est un schéma en blocs d'un exemple d'installation selon l'invention,
- les figures 2 et 3 sont des schémas en blocs d'autres exemples d'installations selon l'invention.

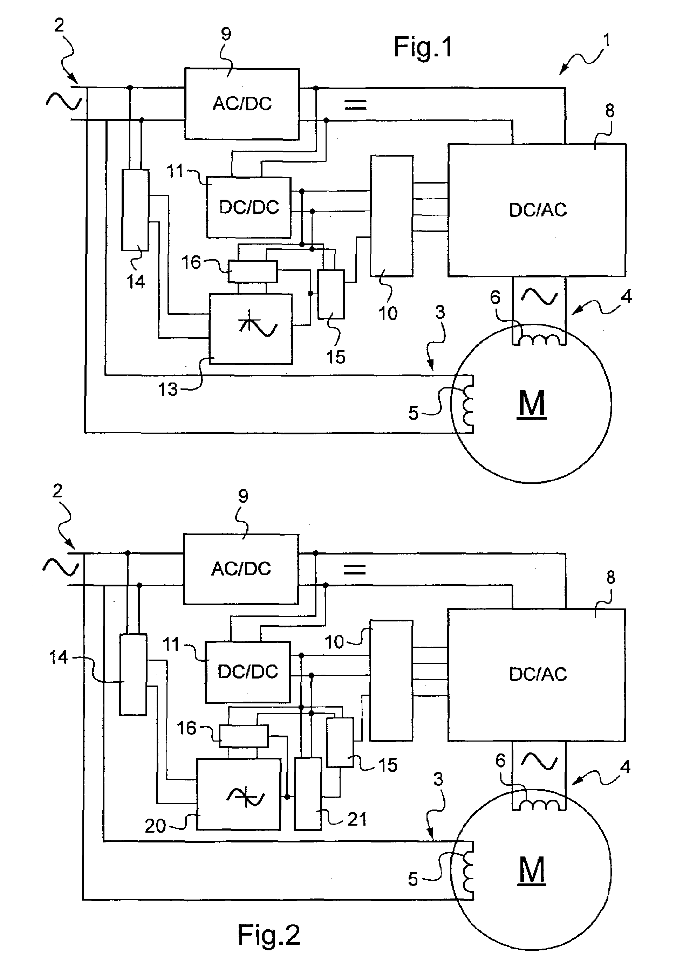

Le système d'alimentation 1, selon l'invention, représenté à la figure 1, comporte une entrée 2 à relier au réseau électrique, par exemple de 240 V 50 Hz ou 110 V 60 Hz, et deux sorties 3 et 4 à relier respectivement à deux enroulements 5 et 6 d'un moteur électrique M asynchrone monophasé, ces enroulements 5 et 6 étant respectivement associés à une première phase et à une deuxième phase de ce moteur M. Les enroulements 5 et 6 peuvent être identiques.

Par identiques, il faut comprendre que les deux enroulements ont le même nombre de spires et les mêmes diamètres de fils et qu'ils occupent le même nombre d'encoches. Par exemple, pour un stator ayant 24 encoches, le premier enroulement occupe 12 encoches et le deuxième enroulement occupe les autres 12 encoches.

Il est possible d'avoir un bobinage non symétrique où par exemple l'enroulement de la première phase occupe 2/3 du nombre total d'encoches et le deuxième enroulement occupe 1/3 du nombre total d'encoches. Dans ce cas, pour obtenir le meilleur couple de démarrage, on peut faire varier l'amplitude de tension de la phase alimentée par l'onduleur. Le champ magnétique est obtenu par le produit N*I, où N le nombre de spires par phase et I le courant dans la phase. Le meilleur champ est obtenu quand N1*I1 de la première phase est égal à N2*I2 de la deuxième phase et que les courants sont déphasés de 90° électriques. Si N1>N2 et que les courants I1 et I2 sont déphasés de 90° électriques, on peut agir sur l'amplitude de la tension de la phase 2 pour obtenir I1=I2. Dans ce cas, la tension U2 est proportionnelle à N2*U1/N1, ce qui donne les conditions idéales pour avoir le meilleur couple de démarrage.

La sortie 3 est reliée directement à la sortie 2. Par « directement », il faut comprendre que l'enroulement 5 est alimenté par le réseau. Au moins un fusible ou un organe de protection en surintensité ou un shunt de lecture du courant peut éventuellement être présent sur la ligne reliant l'entrée 2 à la sortie 3.

La sortie 4 est reliée à un onduleur 8 de type PWM par exemple, encore appelé convertisseur DC/AC, qui est alimenté en courant redressé via un redresseur 9 relié à l'entrée 2.

L'onduleur 8 est commandé par une unité de contrôle qui comporte un contrôleur 10 de commande des composants de puissance de l'onduleur 8 et une alimentation 11 basse tension. L'onduleur 8 comporte par exemple quatre composants de puissance ayant une structure en pont en H, de façon connue en soi.

L'alimentation 11 comporte par exemple un convertisseur DC/DC alimenté par le bus continu en sortie du redresseur 9.

L'unité de contrôle comporte également, dans l'exemple de la figure 1, un détecteur 13 de crête de l'onde de tension du réseau, recevant en entrée une onde de tension non déphasée par rapport à celle du réseau par l'intermédiaire d'un diviseur de tension 14.

L'unité de contrôle peut également comporter un composant 15 donnant l'ordre de la mise en marche de l'onduleur 8 au contrôleur 10 et un composant 16 mettant hors tension le détecteur 13 une fois la détection de crête effectuée, pour diminuer la consommation électrique de l'unité de contrôle, et éviter l'envoi répétitif de signaux du détecteur 13 au composant 15.

Le terme « composant » doit être compris dans le sens fonctionnel et couvre tout circuit électronique capable de réaliser la fonction recherchée, éventuellement sous forme logicielle. Le composant 15 a été représenté séparé du contrôleur 10 et du détecteur 13 mais il pourrait en être autrement. Il en est de même du composant 16.

Le contrôleur 10 pilote l'onduleur 8 pour alimenter la sortie 4 avec une onde de tension sinusoïdale, qui est déphasée de 90° électrique par rapport à l'onde de tension du réseau.

Le fonctionnement du système de la figure 1 est le suivant.

La sortie 3 alimente l'enroulement 5 en permanence. Le passage par un maximum de l'onde de tension du réseau provoque la mise en fonctionnement de l'onduleur qui génère une onde de tension partant de zéro, donc déphasée de 90° électrique. Le détecteur 13 est mis hors service suite à cette détection, par le composant 16.

La variante de la figure 2 diffère de l'exemple de la figure 1 par le fait que le détecteur 13 est remplacé par un détecteur 20 qui détecte le passage par zéro de l'onde de tension du réseau et par le fait que le composant 15 reçoit le signal du détecteur 20 retardé d'une grandeur 1/(4*f) par une temporisation 21.

Le fonctionnement du système d'alimentation de la figure 2 est le suivant.

La sortie 3 alimente l'enroulement 5 avec la tension du réseau, en permanence. Lors du passage par zéro de l'onde de tension du réseau, le détecteur 20 génère un signal correspondant qui est retardé de 1/(4*f) avant de commander, par l'intermédiaire du composant 15, le fonctionnement de l'onduleur 8. Ce dernier génère une tension sinusoïdale déphasée de 90° électrique avec le réseau.

Suite à la détection du passage par zéro de l'onde du réseau, le composant 16 met hors tension le détecteur 20, ce qui arrête les ordres du détecteur 20 vers le composant 15.

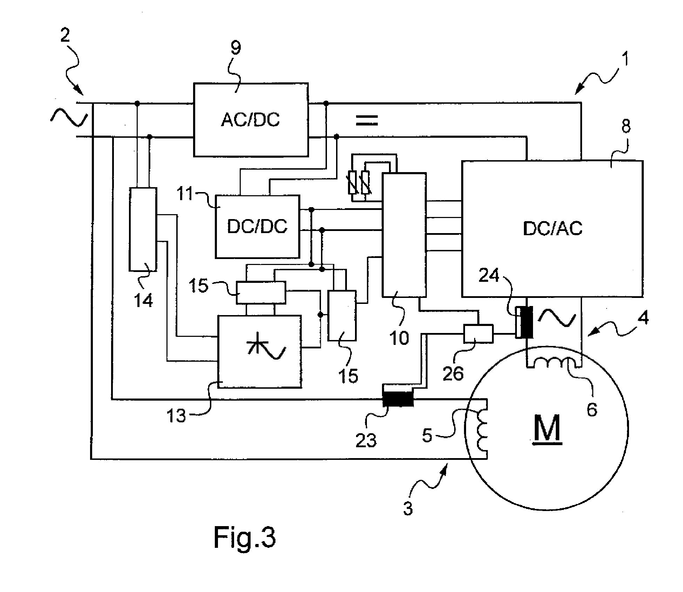

Il est possible, comme illustré à la figure 3, d'ajouter à l'une des installations des figures 1 et 2 un système de synchronisation sur l'onde du réseau. Cela peut se faire par exemple à l'aide de deux shunts 23 et 24 en série avec les sorties 3 et 4 et donnant l'image des courants à un comparateur 26. Ce dernier est lié au contrôleur 10 qui est agencé pour synchroniser la tension à la sortie 4 sur l'onde de tension du réseau.

Bien entendu, l'invention n'est pas limitée aux exemples décrits.

Par exemple, la référence temporelle servant à commander l'onduleur avec un déphasage prédéfini peut être déterminée autrement que par détection d'un passage par zéro ou d'un passage par un extremum de la tension du réseau, par exemple par détection du passage par une tension prédéfinie ou par détection d'une pente de variation de la tension.

Le composant qui met hors circuit le détecteur d'extremum ou de passage par zéro de l'onde de tension du réseau peut, le cas échéant, être supprimé. Dans ce cas, l'information correspondante est transmise périodiquement au contrôleur de l'onduleur.

Dans une variante, la temporisation 21 de l'exemple de la figure 2 est supprimée et l'on utilise un contrôleur 10 programmable, qui permet de faire un calcul de retard et de créer une onde de tension sinusoïdale avec un déphasage souhaité.

Le cas échéant, le système d'alimentation peut être utilisé pour contrôler la vitesse du moteur, par le contrôle de l'amplitude de tension délivrée par l'onduleur.

L'invention a ainsi encore pour objet, indépendamment ou en combinaison avec ce qui précède, un procédé de contrôle de la vitesse d'un rotor asynchrone monophasé dans lequel on agit dans un système d'alimentation où l'une des phases du moteur est reliée au réseau sur l'amplitude de la tension délivrée par l'onduleur à l'autre phase pour contrôler la vitesse du moteur. Il est possible par exemple d'agir sur l'amplitude de la tension en modifiant le rapport cyclique dans le cas d'un onduleur 8 de type PWM par exemple.

Sur la figure 3, on a représenté deux résistances variables reliées au contrôleur 10. Il s'agit par exemple d'une résistance permettant de modifier l'amplitude de la tension délivrée par l'onduleur, l'autre résistance permettant de faire varier le déphasage de la tension délivrée par le variateur par rapport à la tension du réseau. Cela peut permettre un réglage du système d'alimentation en fonction d'un moteur dont les enroulements ne seraient pas identiques, par exemple.

L'expression « comportant un » doit être comprise comme étant synonyme de « comportant au moins un », sauf si le contraire est spécifié.

## Revendications

1. Procédé d'alimentation d'un moteur électrique asynchrone monophasé (M), comportant un premier (5) et un deuxième (6) enroulement, dans lequel l'un (5) des enroulements est alimenté par le réseau alternatif et l'autre enroulement (6) est alimenté par un onduleur (8) qui reçoit une tension redressée du réseau et qui est contrôlé de manière à ce que ce deuxième enroulement (6) soit alimenté avec une onde de tension déphasée par rapport à celle du réseau.

2. Procédé selon la revendication 1, le déphasage étant de 90° électrique ± 5%, au moins lors du démarrage du moteur.

3. Procédé selon l'une des revendications 1 et 2, le contrôle de l'onduleur (8) s'effectuant en fonction d'une détection d'un maximum de tension de l'onde de tension du réseau.

4. Procédé selon l'une des revendications 1 et 2, le contrôle de l'onduleur (8) s'effectuant en fonction de la détection d'un passage par zéro de l'onde de tension du réseau.

5. Procédé selon la revendication précédente, l'onduleur (8) étant contrôlé par un signal retardé de 1/(4*f), où f est la fréquence de la tension du réseau, à partir du passage par zéro de l'onde de tension du réseau.

6. Procédé selon l'une quelconque des revendications précédentes, les premier et deuxième enroulements étant identiques.

7. Procédé selon l'une quelconque des revendications 1 à 5, dans lequel les courants dans les enroulements (5, 6) sont comparés et l'onduleur (8) piloté de manière à synchroniser la tension délivrée par l'onduleur avec l'onde du réseau.

8. Procédé selon l'une quelconque des revendications précédentes, dans lequel l'amplitude de la tension de l'onduleur est modifiée en fonction d'une vitesse de consigne et d'un signal représentatif de la vitesse du moteur.

9. Procédé selon l'une quelconque des revendications précédentes, dans lequel le déphasage est modifié en fonction d'une vitesse de consigne et d'un signal représentatif de la vitesse du moteur.

10. Procédé selon la revendication 2, le déphasage étant constant.

11. Procédé selon l'une quelconque des revendications précédentes, dans lequel la modulation de l'onduleur (8) est du type PWM et dans lequel on modifie le rapport cyclique pour faire varier la vitesse.

12. Procédé selon l'une quelconque des revendications précédentes, les enroulements (5, 6) étant continuellement alimentés.

13. Système d'alimentation d'un moteur (M) électrique asynchrone monophasé comportant un premier (5) et un deuxième (6) enroulement, ce système comportant :
- une entrée (2) reliée à un réseau alternatif,
- une première sortie (3) reliée à l'entrée du système et à relier au premier enroulement (5) du moteur,
- une deuxième sortie (4) à relier au deuxième enroulement (6) du moteur,
- un onduleur (8) relié à l'entrée (2) du système par l'intermédiaire d'un redresseur (9) et relié à la deuxième sortie (4),
- une unité de contrôle de l'onduleur, configurée pour agir sur le fonctionnement de celui-ci de telle sorte que l'onde de tension fournie par l'onduleur à la deuxième sortie (4) soit déphasée d'une grandeur prédéfinie par rapport à l'onde de tension du réseau, le déphasage étant de préférence égal à 90° électrique, au moins lors du démarrage du moteur.

14. Système selon la revendication précédente, le déphasage étant de 90° électrique ± 5 %.

15. Système selon l'une des deux revendications précédentes, l'unité de contrôle comportant un détecteur (13) agencé pour détecter un extremum de l'onde de tension du réseau et commander l'onduleur en fonction de la détection de cet extremum.

16. Système selon l'une des revendications 13 et 14, l'unité de contrôle de l'onduleur comportant un détecteur (20) agencé pour détecter un passage par zéro de l'onde de tension du réseau et commander l'onduleur en fonction de cette détection.

17. Système selon la revendication précédente, l'unité de contrôle de l'onduleur comportant une temporisation (21) pour retarder le signal correspondant au passage par zéro de l'onde de tension et commander en fonction de ce signal retardé l'onduleur.

18. Système selon l'une des revendications 15 et 16, comportant un composant (16) pour mettre hors tension le détecteur une fois la détection effectuée.

19. Système selon l'une quelconque des revendications 13 à 18, l'unité de contrôle étant agencée pour modifier l'amplitude de la tension délivrée par l'onduleur en fonction d'une vitesse de consigne et de la vitesse mesurée ou estimée.

20. Système selon l'une quelconque des revendications 13 à 19, l'unité de contrôle étant agencée pour modifier le déphasage en fonction d'une vitesse de consigne et de la vitesse mesurée ou estimée.

21. Ensemble comportant un système d'alimentation tel que défini dans l'une quelconque des revendications 13 à 20 et un moteur (M) électrique monophasé asynchrone, dont les premier et deuxième enroulements sont respectivement reliés aux première et deuxième sorties du système de contrôle.

22. Ensemble selon la revendication 21, les premier et deuxième enroulements étant identiques.
